(19) Europäisches Patentamt
European Patent Office
Office européen des brevets

(11) **EP 1 063 063 B1**

(12) **EUROPÄISCHE PATENTSCHRIFT**

(45) Veröffentlichungstag und Bekanntmachung des Hinweises auf die Patenterteilung:
**06.10.2004  Patentblatt 2004/41**

(51) Int Cl.⁷: **B25J 9/16**, G01B 5/012

(21) Anmeldenummer: 00111528.6

(22) Anmeldetag: **30.05.2000**

(54) **Verfahren und Vorrichtungen zur Bestimmung des Gewichtes eines Tasters einer Koordinatenmessmaschine**

Processes and devices for the determination of the weight of a probe of a coordinate-measuring machine

Procédés et machines pour déterminer le poids d'un palpeur d'une machine de mesure de coordonnées

(84) Benannte Vertragsstaaten:
**DE FR GB IT**

(30) Priorität: **26.06.1999  DE 19929334**

(43) Veröffentlichungstag der Anmeldung:
**27.12.2000  Patentblatt 2000/52**

(73) Patentinhaber: **Carl Zeiss Industrielle Messtechnik GmbH**
**73447 Oberkochen (DE)**

(72) Erfinder:
• **Szenger, Franz**
**89551 Königsbronn (DE)**
• **Grupp, Günter**
**89558 Böhmenkirch (DE)**
• **Bernhardt, Ralf**
**73432 Aalen (DE)**

(74) Vertreter: **Henckell, Carsten**
**Carl Zeiss**
**Patentabteilung**
**73446 Oberkochen (DE)**

(56) Entgegenhaltungen:
**EP-A- 0 286 107          EP-A- 0 508 670**
**DE-A- 3 725 207          US-A- 4 587 853**

• **BITTLE S D ET AL:
"MECHATRONICS,GB,PERGAMON PRESS, OXFORD" MECHATRONICS,GB,PERGAMON PRESS, OXFORD, Bd. 7, Nr. 4, 1. Juni 1997 (1997-06-01), Seiten 337-354, XP000657015 ISSN: 0957-4158**

**Beschreibung**

Die Erfindung betrifft ein Verfahren zur Bestimmung des Gewichtes eines mit einem Tastkopf verbundenen Tasters einer Koordinatenmessmaschine. Es ist beispielsweise aus der DE 197 53 303A ein Verfahren zur Steuerung von Koordinatenmessgeräten unter Einbeziehung des Gewichtes des Tasters bekannt. Zur Bestimmung des Gewichtes des Tasters ist vorgesehen, die Bahnbeschleunigung des Tastkopfes zu ermitteln. Die Beschleunigung des Tastkopfes wird aus der Ableitung der zeitlichen Änderung der gemessenen Tastkopfpositionen bzw. aus der Ableitung der Sollwerte ermittelt.

Aus dieser Schrift ist ein weiteres dynamisches Verfahren zur Bestimmung des Gewichtes des Tasters bekannt. Bei diesem Verfahren wird der Taster auf einer Kreisbahn geführt, wobei durch Kraftbeaufschlagung des Tasters, der Taster in einer Ruhelage bezüglich der Horizontalen gehalten wird, die er im Ruhezustand einnimmt. Aus der Kraft, die erforderlich ist, um den Taster in der Ruhelage zu halten, wird das Gewicht des Tasters bestimmt.

Die Bestimmung des Gewichtes des Tasters, wie bereits in der DE 197 53 303A beschrieben, wird bevorzugt im bereits eingebauten Zustand vorgenommen, weil dann das bestimmte Gewicht bereits im System vorliegt und somit benutzerseitige Eingabefehler unterbunden sind, zum anderen wird das Gewicht des Tasters bereits in der für den Betrieb vorgesehenen Konfiguration bestimmt. Dynamische Verfahren haben jedoch den Nachteil, dass die ermittelten Werte mit großen Messfehlern behaftet sind.

Üblicherweise sind Koordinatenmessmaschinen mit unterschiedlichen Tastern, die in Abhängigkeit von dem zu vermessenden Gegenstand ausgewählt werden, betreibbar. Oftmals konfigurieren sich die Betreiber der Koordinatenmessmaschinen selbst den auf ihre Bedürfnisse angepassten Taster. Es ist zwar seitens der Anbieter von Koordinatenmessmaschinen bzw. Koordinatenmessgeräten prinzipiell möglich das Gewicht von Tastern in der Steuerung der Koordinatenmessmaschine bereits zu berücksichtigen, jedoch würde dies eine starke Einschränkung für den Betreiber bedeuten, der dann nur noch auf die vom Hersteller der Koordinatenmessmaschine in begrenzter Anzahl angebotenen Taster zurückgreifen könnte. Solch eine starke Beschränkung ist jedoch keineswegs wünschenswert.

Seitens der Betreiber von Koordinatenmessgeräten ist es gewünscht die Freiheit zu haben eigene Taster einsetzen zu können. Um jedoch weiterhin eine hohe Messgenauigkeit der Koordinatenmessmaschine gewährleisten zu können, insbesondere bei hohen Abfahrgeschwindigkeiten der zu vermessenden Oberfläche, ist es erforderlich das Gewicht des momentan eingesetzten Tasters möglichst genau zu kennen, um in Abhängigkeit von der Abtastgeschwindigkeit die auftretenden Fliehkräfte kompensieren zu können.

Der Erfindung lag die Aufgabe zu Grunde ein weiteres und vereinfachtes Verfahren zur Bestimmung des Gewichtes des Tasters, der mit dem Tastkopf verbunden ist, bereitzustellen.

Weiterhin lag der Erfindung die Aufgabe zu Grunde, die Genauigkeit bei der Ermittlung des Gewichtes des Tasters zu erhöhen.

Die Aufgabe der Erfindung wird durch die im Patentanspruch 1, 6, 10 oder 11 genannten Merkmale gelöst.

Um die Bestimmung des Gewichtes des Tasters mit hoher Genauigkeit gewährleisten zu können, hat es sich als vorteilhaft herausgestellt das Gewicht des Tasters statisch oder frei dynamisch zu bestimmen. Bei einer statischen Bestimmung verharrt der Taster während der Bestimmung in einer Position.

Bei der statischen Bestimmung des Gewichtes des Tasters können über die Zeit gemittelte Werte herangezogen werden, wodurch die Messgenauigkeit erhöht wird. Auch treten bei einer statischen Bestimmung keine durch den Aufbau des Tastkopfes begründeten Dämpfungseffekt, die temperaturabhängig sein können, auf.

Durch die einfache Zuordnung einer durch den Tastkopf eingeleiteten Kraft und einer eingenommenen von der Ruheposition abweichenden Position, auch mit Auslenkung bezeichnet, kann aus dem Verhältnis von Kraft zur Strecke auf das Gewicht des Tasters geschlossen werden. In einzelnen bevorzugten Ausführungsbeispielen ist vorgesehen, dass der Taster mit einer vorbestimmten Kraft beaufschlagt wird, wodurch aus der eingenommenen Auslenkposition unter Bezugnahme auf eine Eichkurve direkt auf das Gewicht des Tasters geschlossen werden kann.

In einem weiteren Ausführungsbeispiel ist vorgesehen, dass eine vorbestimmte Auslenkposition mit dem Taster angefahren wird, wobei aus der erforderlichen Kraft unter Bezugnahme auf eine entsprechende Eichkurve auf das Gewicht des Tasters geschlossen werden kann.

Es hat sich als vorteilhaft herausgestellt, dem Taster eine Kraftbeaufschlagung in elektrische Signale umwandelndes Element zuzuordnen. Insbesondere haben sich Piezos als geeignete Elemente herausgestellt, die kostengünstig sind und zuverlässig arbeiten. Diese Piezoelemente weisen eine hohe innere Steifigkeit auf, wodurch eine unerwünschte Verfälschung der Messwerte bzgl. der Z-Komponente nicht auftritt.

Es hat sich als vorteilhaft herausgestellt den Taster unter Zwischenschaltung des umwandelnden Elements mit dem Tastkopf zu verbinden, so dass mit Abschluss der Montage des Tasters bereits die sein Gewicht charakterisierenden Signale der Steuereinrichtung zugeleitet werden können, wobei das umwandelnde Element zwischen dem Tastkopf und einer Tastkopfwägeeinheit angeordnet ist. Dieses umwandelnde Element ist einer Wägezelle zugeordnet, die fest mit den angrenzenden Bauteilen z.B. mittels Verkleben, Verschraubung usw. verbunden ist.

Ist die Auslenkung aus der Nullage für die Bestimmung des Gewichtes des Tasters in der Steuereinrichtung mit einer entsprechenden Eichkurve von Signalwert zu Gewicht des Tasters abgelegt, so kann in Abhängigkeit von den zugeleiteten Signalen direkt auf das Gewicht des Tasters geschlossen werden, wobei die Nullage die Position ist, die ohne aufgenommenen Taster vom Tastkopf eingenommen ist.

Es hat sich als vorteilhaft herausgestellt bei einem mit einer Kompensationsfeder zur Kompensation des Eigengewichtes des Tasters versehenen Tastkopfes das Maß der Verstellung der Kompensationsfeder für die Bestimmung des Gewichtes des Tasters heranzuziehen. Solche Kompensationsfedern weisen einen ersten Aufhängepunkt auf, der vertikal, beispielsweise durch Ansteuerung eines zugeordneten Elektromotors, verschiebbar ist, wobei ein zweiter Aufhängepunkt mit dem Taster in Wirkverbindung steht. Insbesondere können als Standardbauteile erhältliche Elektromotoren, die mit einem Inkrementalgeber versehen sind, vorgesehen werden, so dass durch die bei Ansteuerung des Elektromotors zur Kompensation des Eigengewichtes des Tasters detektierten Inkremente das Gewicht des Tasters bestimmt wird.

Weist der Elektromotor keine Sensorik zur Aufnahme des Stellweges auf, so kann alternativ vorgesehen sein, dass das Gewicht eines Tasters bestimmt wird, indem die Auslenkung in z-Richtung, die durch die Gewichtskraft des Tasters begründet ist, aufgenommen wird, indem die durch die Gewichtskraft des Tasters begründete Auslenkung in z-Richtung durch Strombeaufschlagung einer vorgesehenen Stelleinrichtung kurzzeitig kompensiert wird, womit ein die Auslenkung charakterisierender Strom detektiert wird. Bei Vorliegen einer Eichkurve kann von dem Strom auf das Gewicht des Tasters geschlossen werden.

Ist die Federkonstante des Tastkopfes bezüglich der z-Richtung, d.h. der Wirkrichtung der Schwerkraft bekannt, so kann direkt durch die Aufnahme der Auslenkung des Tastkopfes nach der Tasteraufnahme auf das Gewicht des Tasters geschlossen werden.

Ein weiterer Vorteil, unabhängig von dem gewähltem Verfahren zur Gewichtsbestimmung, ist auch, dass bei bekanntem Gewicht des eingesetzten Tasters auch eine Überbeanspruchung, insbesondere der Federsysteme in dem Tastkopf, verhindert wird, indem bei einem einen Maximalwert überschreitenden Gewicht des Tasters der Messbetrieb mit der Koordinatenmessmaschine nicht zugelassen wird. Dadurch wird gleichzeitig dem Benutzer signalisiert, dass der eingesetzte Taster für den Betrieb mit dieser Koordinatenmessmaschine nicht geeignet ist.

Weitere vorteilhafte Maßnahmen sind in weiteren Unteransprüchen beschrieben. Im folgenden wird die Erfindung an Hand einiger Ausführungsbeispiele näher beschrieben.

Es zeigt:

Figur 1:     Tastkopf einer Koordinatenmessmaschine;

Figur 2:     Schematische Darstellung eines Pendelsystems;

Figur 3:     Grafische Darstellung der angelegten Kraft in bezug auf die resultierende Auslenkung für Taster mit unterschiedlichem Gewicht;

Figur 4:     Graphische Darstellung der erforderlichen Kraft für eine vorbestimmte Auslenkung in Abhängigkeit vom Gewicht des Tasters;

Figur 5:     Schematische Darstellung eines Tastkopfes mit Wägezelle.

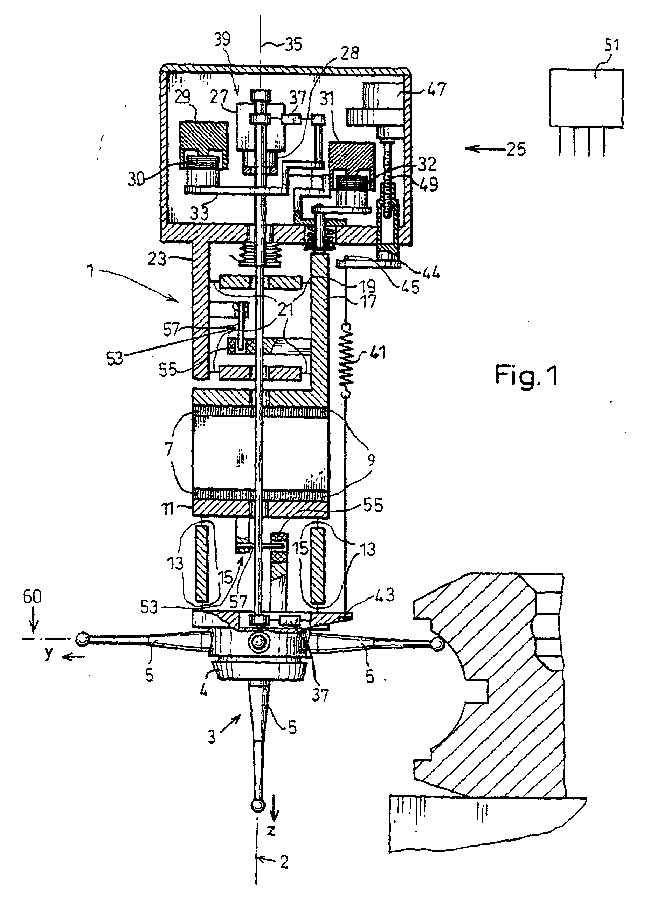

Anhand von Figur 1 wird zunächst der prinzipielle Aufbau eines Tastkopfes 1, der mit einem Taster 3 fest verbunden ist, näher erläutert. Der Taster 3, welcher beispielsweise eine Reihe von sternförmig angeordneten Taststiften 5 aufweist, ist über ein vier Blattfedern 13 aufweisendes Federparallelogramm 15 mit der Platte 11 verbunden. Die Platte 11 ist andererseits über ein weiteres Federparallelogramm 9, deren Blattfedern 7 um 90° versetzt zu den Blattfedern 13 an der Platte 11 angreifen, an einem Winkelstück 17 befestigt.

Das Winkelstück 17 hängt über ein drittes Federparallelogramm 21, welches horizontal liegende Blattfedern 19 aufweist, an einem Verbindungsstück 23. Das Verbindungsstück 23 ist mit einem Oberteil 25 starr verbunden oder greift an dem Winkelstück 17 an. Durch diese torsionssteife Aneinanderreihung dreier spiel- und reibungsfreier Geradeführungssysteme wird ein kartesisches Koordinatensystem x, y, z aufgespannt. Hierin ist beispielsweise das Winkelstück 17 parallel zur z-Richtung, die Platte 11 parallel zur z- und x-Richtung und schließlich eine Tasteraufnahme 4 samt Taster 3 parallel zu der x-, y- und z-Richtung beweglich.

Im Oberteil 25 des Tastkopfes 1 sind beispielsweise drei Tauchspulsysteme 28, 30, 32 angeordnet, deren Ringspaltmagnete 27, 29, 31 im Oberteil 25 feststehend gelagert sind und deren Tauchspulen 28, 30, 32 aus einer mittleren Nullage heraus, je nach Stromrichtung des in die Tauchspulen 28, 30, 32 eingegebenen Stromes, in den Ringspalt der Magnete 27, 29, 31 hereingezogen oder herausgedrückt werden. Die Stromzuführung jeder einzelnen Tauchspule 28, 30, 32 kann wahlweise ein- oder ausgeschaltet bzw. entsprechend elektronisch mittels der Steuereinrichtung 51 gesteuert werden, um eine Kraftbeaufschlagung gezielt einleiten zu können. Die Bewegungen der Tauchspulen 28, 30, 32 werden mittels eines im Oberteil 25 um eine Achse 35 drehbar gelagerten Hebels 33 und weiterer elastisch miteinander verbundenen Übertragungselementen 37 auf die Tasteraufnahme 4 übertragen. Durch die mit dem Bezugzeichen 27 bis 37 gekennzeichneten Elemente wird ein Tauchspulensystem 39 gebildet. Mittels dieses Tauchspulensystems 39 ist eine Kraftbeaufschlagung des Tasters 3 mittels einer vorbestimmten Strombeaufschlagung mindesten einer der Spulen 28, 30, 32 gezielt einleitbar.

Die Bewegung des Tasters 3 wird durch im Tastkopf 1 vorgesehene Sensoren 53 aufgenommen. In diesem Ausführungsbeispiel sind als Sensoren ebenfalls, entsprechend dem Tauchspulensystem 39 zur Einleitung einer Bewegung des Tasters 3, induktive Systeme als Sensoren 53, eine Spule 55 und einen Magneten 57 umfassend, vorgesehen.

Mit dem Tastkopf 1 sind verschiedene Taster 3, die abgestimmt auf den zu vermessenden Gegenstand ausgewählt werden, einsetzbar. Diese Taster 3 weisen in der Regel unterschiedliches Gewicht auf. Zum Ausgleich, der durch dieses Gewicht hervorgerufenen Auslenkung in z-Richtung ist der Tastkopf 1 mit einer Kompensationsfeder 41 versehen, die einen ersten an der Tasteraufnahme 4 angreifenden Aufhängpunkt 43 aufweist. Ein zweiter gegenüberliegender Aufhängpunkt 45 greift an einem vertikal verfahrbaren Bauteil 44 an. Im dargestellten Ausführungsbeispiel steht dieser zweite Aufhängpunkt 45 mit einer Gewindespindel 49 in Wirkverbindung, die mittels eines im Oberteil 25 des Tastkopfes 1 ortsfest angeordneten Motors 47 antreibbar ist. Aus einer Rotationsbewegung der Spindel 49 resultiert eine Bewegung des Aufhängpunktes 45 in vertikaler Richtung, hier in z-Richtung. Diese Kompensationsfeder 41 ist zu dem Federparallelogramm 21 parallel geschaltet.

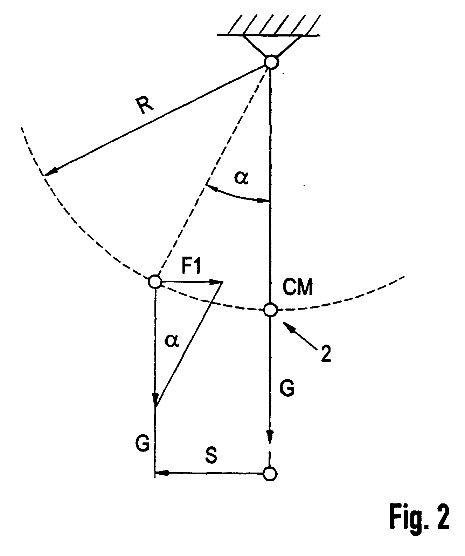

Im folgenden wird an Hand der Figur 2 ein Verfahren zur Bestimmung des Gewichtes des jeweils eingesetzten Tasters 3 näher beschrieben.

Mit Inbetriebnahme einer nicht dargestellten Koordinatenmessmaschine wird durch Ansteuerung bzw. Strombeaufschlagung, vorzugsweise einer der Spulen 28, 30, 32, eine vorbestimmte Kraft eingeleitet, aus der eine Auslenkung des Tasters 3 aus der Ruhelage 2 resultiert. Diese Auslenkung wird mittels der Sensoren 53 erfasst. Durch die für jede Bewegungsrichtung vorgesehenen Federparallelogramme 9, 15, 21 beschreibt der Taster 3 und damit der Schwerpunkt CM der zu bestimmenden Masse, bei Auslenkung einen Kreisbogen mit dem Radius R, wie in Figur 2 dargestellt. Die durch den Taster 3 wirkende Gewichtskraft CM kann in eine senkrechte Komponente G und in eine parallel zu der durch die x-, y-Richtung aufgespannten Ebene verlaufenden Komponente $F_1$ zerlegt werden. Für kleine Auslenkwinkel $\alpha$ gilt:

$$\tan \lambda \approx \lambda = S/R$$

wobei R der Radius des Kreisbogens ist, auf dem der Taster 3 ausgelenkt wird. Für die horizontale Rückstellkraft $F_1$, die aus dem Gewicht des Tasters 3 resultiert, gilt:

$$F\,1 = G * \tan \lambda = G * S/R$$

Da der Taster 3 entgegen der Federkraft eines oder mehrere des Federparallelogramme 9, 15 ausgelenkt wird, wirken auch noch elastische Rückstellkräfte durch die Blattfedern 7,13 mindestens eines der Federparallelogramms 9, 15 für die gilt:

$$F_C = C * S$$

und für die Gesamtrückstellkraft gilt:

$$F = F\,1 + F_C = G * S/R + C * S$$

Bei eingenommener Auslenkposition wird durch Aufnahme des Tasters 3 das Gewicht um $\Delta G$ erhöht. Um nun die Auslenkung S konstant zu halten, muss die Kraft um $\Delta F$ erhöht werden. Es gilt:

$$F + \Delta F = (G + \Delta G) * S/R + C * S = S * G/R + \frac{S * \Delta G}{R} + C * S$$

und

$$\Delta F = F + \Delta F - F = S * G/R + S \frac{\Delta G}{R} + C * S - (S * G/R + C * S)$$

Somit gilt:

$$\Delta F = S \frac{\Delta G}{R}$$

Durch den Einsatz der Tauchspulen ist die eingeleitete Kraft proportional zum Strom I bzw. zur Spannung U, mit der die Tauchspule 27 bei Auslenkung in x-Richtung, beaufschlagt wird. Es gilt:

$$\Delta F = K * \Delta U$$

wobei K ein Proportionalitätsfaktor ist und somit gilt :

$$\Delta G = K * \Delta U* R/S.$$

R ist aufgrund des Aufbaus des Tastkopfes bekannt, so dass bei Vorgabe einer konstanten Auslenkung auch die Strecke S eine Konstante ist, so dass das Produkt aus K * R/S zu einer Konstante q zusammengefasst werden kann.
Damit gilt:

$$\Delta G = q * \Delta U$$

Durch eine Eichmessung, bei der ein bekanntes Gewicht von der Taststiftaufnahme 4 aufgenommen ist, ist diese Konstante g bestimmbar. Damit kann bei Änderung des Gewichtes durch einen beliebigen aufgenommenen Taster 3 in Abhängigkeit von der Änderung der Spannung, die erforderlich ist, um die vorbestimmte Auslenkposition weiterhin beizubehalten, direkt auf das Gewicht des Tasters 3 geschlossen werden.
Es kann auch vorgesehen sein, eine Auslenkung aus der Ruhelage 2 mittels Einleitung einer vorbestimmten Kraft zu induzieren, wobei das Maß der Auslenkung S aufgenommen wird. Anhand von diesem aufgenommenem Maß wird das Gewicht $\Delta G$ des Tasters bestimmt, wie im folgenden näher erläutert wird. Vorab wird durch eine einmalige Eichmessung die Federkonstante C der Federparallelogramme 21, 15, 9, die alle identisch aufgebaut sind und sich nur durch ihre räumliche Orientierung unterscheiden, bestimmt. Besonders einfach lässt sich die Federkonstante C des Federparallelogrammes 9 bestimmen, indem der Tastkopf 1 in horizontale Lage gebracht wird und sich auf einer Ebene bzw. Platte abstützend durch Strombeaufschlagung, z. B. der Tauchspule 32, parallel zur x-, y-Ebene ausgelenkt wird. Es ist auch die Auslenkung in eine zur horizontalen Ebene parallelen Richtung zur Bestimmung der Federkonstante C eines weiteren Federparallelogrammes 21 oder 15 möglich, wobei der Wert von C für die Federparallelogramme 9, 15, 21 für alle Richtungen aufgrund des Aufbaus des Tastkopfes 1 bei dem dargestellten Ausführungsbeispiel identisch ist und somit die Bestimmung der Federkonstanten bezüglich einer Komponenten ausreicht. Da der Tastkopf 1 in einer horizontalen Ebene bewegt wird, kann bei Vernachlässigung der Reibungskraft, die zwischen der horizontalen Abstützfläche und dem Taster 3 durch die Gewichtskraft des Tasters 3 und Tastkopfes 5 bedingt auftritt, aus der Strombeaufschlagung der Tauchspule 31 direkt auf die Federkonstante, aufgrund der Proportionalität des Stromes zur eingeleiteten Kraft, geschlossen werden.
Bei montiertem Taster 3 kann nun in Abhängigkeit von einer sensierten Auslenkung in z-Richtung, da ja die Federkonstante des Federparallelogramms bekannt ist, direkt auf die Masse bzw. das Gewicht des Tasters 3 geschlossen werden. Es kann auch vorgesehen sein durch Strombeaufschlagung der Tauchspule 31 kurzzeitig den Taster 3 auf eine vorbestimmte Nullage 60 zu positionieren, die vorzugsweise von der Tasteraufnahme 4 eingenommen wird, sofern kein Taster 3 aufgenommen ist. Dann kann in Abhängigkeit von dem erforderlichen Strom auf das Gewicht des Tasters 3 geschlossen werden. Es kann auch vorgesehen sein, durch Ansteuerung des Motors 47 den Taster 3 auf die vorbestimmte Nullage 60 zu positionieren, wobei der Weg, den der Aufhängepunkt 45 dabei zurücklegt, detektiert wird. Zur Aufnahme dieses Weges kann der Einsatz eines mit einem Inkrementalgeber (nicht dargestellt) versehenen Motors vorgesehen sein. Solche mit Inkrementalgeber versehene Motoren sind als Standardbauteile erhältlich.

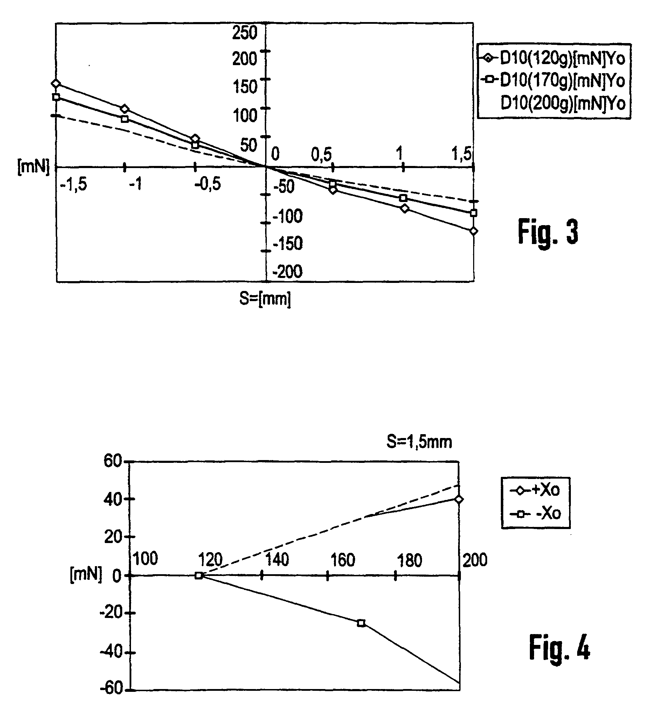

In Figur 3 ist die Abhängigkeit der erforderlichen Kraft in Abhängigkeit von der Auslenkung aus der Ruhelage für Taster 3 mit unterschiedlichem Gewicht dargestellt.
In Figur 4 ist die Abhängigkeit der erforderlichen Kraft zu dem Gewicht des Tasters für eine konstante Auslenkung, hier vom Betrag 1,5 mm, dargestellt.

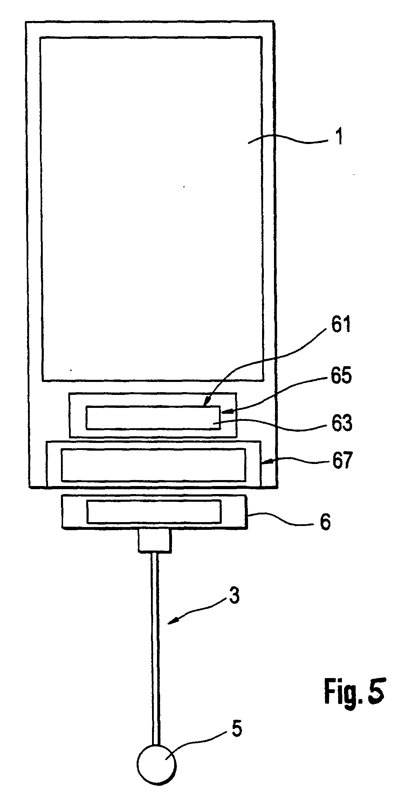

In Figur 5 ist ein Tastkopf 1 dargestellt, der eine Wägezelle 65 umfasst, die für eine Gewichtsbestimmung des Tastergewichtes vorgesehen ist. Diese Wägezelle 65 ist zwischen dem Tastkopf 1 und einer Tasterwechseleinheit 67 angeordnet. Die Wägezelle 65 ist einerseits mit einem Bauteil des Tastkopfes 1 fest verbunden und andererseits mit der Tasterwechseleinheit 67 z.B. mittels Kleben, Verschrauben usw. fest verbunden. Die Wägezelle 65 umfasst ihrerseits als umwandelndes Element 61, beispielsweise einen Piezo 63, der in Abhängigkeit von dem Gewicht des eingesetzten Tasters 3 einen Spannungswert liefert. Das jeweils mitgemessene Gewicht der Tasterwechseleinheit 67 ist als Offsetwert abzuziehen.

Durch die Tasterwechseleinheit 67 und einem Tasterstiftteller 6, der über eine Dreipunktlagerung mit der Tasterwechseleinheit 67 in Verbindung steht, wird eine Einheit gebildet.

Allen diesen beschriebenen Verfahren zur Bestimmung des Gewichtes des eingesetzten Tasters 3 ist gemeinsam, dass das Gewicht des Tasters ohne aktive Steuerung des bewegung des Tasters durch die Koordinatenmessmaschine bestimmt wird, das heißt, der Taster 3 wird auf keiner seitens der Koordinatenmessmaschine vorgegebenen Bewegungsbahn aktiv geführt.

Bezugszeichenliste:

| | |
|---|---|
| 1 | Tastkopf |
| 2 | Ruhelage |
| 3 | Taster |
| 4 | Tasteraufnahme |
| 5 | Taststifte |
| 6 | Taststiftteller |
| 7 | Blattfedern |
| 9 | Federparallelogramm |
| 11 | Platte |
| 13 | Blattfedern |
| 15 | Federparallelogramm |
| 17 | Winkelstück |
| 19 | Blattfedern |
| 21 | Federparallelogramm |
| 23 | Verbindungsstück |
| 25 | Oberteil |
| 27 | Ringspaltmagnet |
| 28 | Tauchspule |
| 29 | Ringspaltmagnet |
| 30 | Tauchspule |
| 31 | Ringspaltmagnet |
| 32 | Tauchspule |
| 33 | Hebel |
| 35 | Achse |
| 37 | Übertragungselement |
| 39 | Tauchspulensystem |
| 41 | Kompensationsfeder |
| 43 | erster Aufhängpunkt |
| 44 | vertikal verfahrbares Bauteil |
| 45 | zweiter Aufhängpunkt |
| 47 | Motor |
| 49 | Gewindespindel |
| 51 | Steuereinrichtung |
| 53 | Sensor |
| 55 | Spule |
| 57 | Magnet |
| 60 | Nulllage |
| 61 | umwandelndes Element |
| 63 | Piezo |
| 65 | Wägezelle |

67    Tasterwechseleinheit

**Patentansprüche**

1.  Verfahren zur Bestimmung des Gewichtes eines mit einem Tastkopf einer Koordinatenmessmaschine verbundenen Tasters, wobei die Koordinatenmessmaschine eine Steuereinrichtung umfasst, der Signale vom Taster bzw. Tastkopf zugeleitet werden, **dadurch gekennzeichnet, dass** durch die Steuereinrichtung (51) der Taster (3) aus einer Ruhelage (2) ausgelenkt wird und aus dem Verhältnis von eingeleiteter Kraft und sensierter Auslenkung das Gewicht des Tasters (3) bestimmt wird.

2.  Verfahren nach Anspruch 1, **dadurch gekennzeichnet, dass** dem Taster (3) ein eine Kraftbeaufschlagung in elektrische Signale umwandelndes Element (61) zugeordnet ist, dessen Signale der Steuereinrichtung (51) zugeleitet werden.

3.  Verfahren nach Anspruch 2, **dadurch gekennzeichnet, dass** das umwandelnde Element (61) einen Piezo (63) umfasst.

4.  Verfahren nach Anspruch 2, **dadurch gekennzeichnet, dass** der Taster (3) unter Zwischenschaltung des umwandelnden Elementes (61) mit dem Tastkopf (1) verbunden ist.

5.  Verfahren nach Anspruch 1, **dadurch gekennzeichnet, dass** der Taster (3) für die Auslenkung aus der Ruhelage (2) mit einer vorbestimmten Kraft beaufschlagt wird.

6.  Verfahren zur Bestimmung des Gewichtes eines mit einem Tastkopf einer Koordinatenmessmaschine verbundenen Tasters, wobei die Koordinatenmessmaschine eine Steuereinrichtung umfasst, der Signale vom Taster bzw. Tastkopf zugeleitet werden, **dadurch gekennzeichnet, dass** der Taster (3) auf eine Nulllage (60), die der Tastkopf vor Aufnahme des Tasters eingenommen hatte, positioniert wird, indem ein zur Auslenkung des Tasters (3) vorgesehener Antrieb (31) angesteuert wird, wobei aus der eingeleiteten Kraft das Gewicht des Tasters bestimmt wird.

7.  Verfahren nach Anspruch 1, **dadurch gekennzeichnet, dass** der Taster (3) auf eine Nulllage (60), die der Tastkopf (1) ohne Taster (3) eingenommen hatte, positioniert wird, wobei der Tastkopf (1) mit einer Kompensationsfeder (41) zur Kompensation des Eigengewichtes versehen ist, der einen nicht mit dem Taster (3) verbundenem Aufhängpunkt (45) aufweist, der zur Wiedereinnahme der Nulllage (60) nach Aufnahme des Tasters (3) vertikal verschoben wird und einen mit dem Taster (3) in Wirkverbindung stehenden Aufhängpunkt (43) aufweist, wobei die Verschiebung des Aufhängpunktes (45) einer Auslenkung (5) des Tasters (3) entspricht.

8.  Verfahren nach mindestens einem der vorangegangenen Ansprüche, **dadurch gekennzeichnet, dass** die Bestimmung des Gewichtes des Tasters (3) mindestens bei jedem Tasterwechsel, vorzugsweise bei jeder Inbetriebnahme der Koordinatenmessmaschine, durchgeführt wird.

9.  Verfahren nach einem der vorangegangenen Ansprüche, **dadurch gekennzeichnet, dass** bei Detektion eines einen Maximalwert überschreitenden Gewicht des Tasters (3) der Messbetrieb mit der Koordinatenmessmaschine verhindert wird.

10. Koordinatenmessmaschine mit einem Tastkopf und einem mit diesem verbindbaren Taster, sowie einer Vorrichtung mit einer Steuereinrichtung, **dadurch gekennzeichnet, dass** die Steuereinrichtung so ausgebildet ist, dass hiermit das Verfahren zur Bestimmung des Gewichtes des Tasters nach mindestens einem der vorangegangenen Ansprüche 1 bis 5, 7 bis 9 ausgeführt werden kann, wobei durch die Steuereinrichtung (51) der Taster (3) aus einer Ruhelage (2) ausgelenkt wird und aus dem Verhältnis von eingeleiteter Kraft und sensierter Auslenkung das Gewicht des Tasters (3) von der Steuereinrichtung bestimmt wird.

11. Koordinatenmessmaschine mit einem Tastkopf und einem mit diesem verbindbaren Taster, sowie einer Vorrichtung mit einer Steuereinrichtung, **dadurch gekennzeichnet, dass** die Steuereinrichtung so ausgebildet ist, dass hiermit das Verfahren zur Bestimmung des Gewichtes des Tasters nach mindestens einem der vorangegangenen Ansprüche 6, 8 oder 9 ausgeführt werden kann, wobei durch die Steuereinrichtung (51) der Taster (3) auf eine Nulllage (60), die der Tastkopf vor Aufnahme des Tasters eingenommen hatte, positioniert wird, indem ein zur Auslenkung des Tasters (3) vorgesehener Antrieb (31) angesteuert wird, wobei aus der eingeleiteten Kraft das Gewicht des Tasters bestimmt wird.

**Claims**

1.  Method for determining the weight of a probe connected to a probe head of a coordinate measuring machine, the coordinate measuring machine comprising a control device which is fed signals from the probe or probe head, **characterized in that** the control device (51) deflects the probe (3) from a rest position (2), and the weight of the probe (3) is determined from the ratio of the introduced force and sensed deflection.

2.  Method according to Claim 1, **characterized in that** the probe (3) is assigned an element (61) which converts an applicational force into electric signals and whose signals are fed to the control device (51).

3.  Method according to Claim 2, **characterized in that** the converting element (61) is a piezo element (63).

4.  Method according to Claim 2, **characterized in that** the probe (3) is connected to the probe head (1) with the intermediate selection of the converting element (61).

5.  Method according to Claim 1, **characterized in that** a predetermined force is applied to the probe (3) for the deflection from the rest position (2).

6.  Method for determining the weight of a probe connected to a probe head of a coordinate measuring machine, the coordinate measuring machine comprising a control device which is fed signals from the probe or probe head, **characterized in that** the probe (3) is positioned at a zero position (60) which the probe head had assumed before accommodating the probe, this being done by triggering a drive (31) provided for deflecting the probe (3), the weight of the probe being determined from the introduced force.

7.  Method according to Claim 1, **characterized in that** the probe (3) is positioned at a zero position (60) which the probe head (1) had assumed without the probe (3), the probe head (1) being provided with a compensation spring (41) for compensating the dead weight, which has a suspension point (45) that is not connected to the probe (3) and is vertically displaced in order to reassume the zero position (60) after accommodating the probe (3), and which has a suspension point (43) actively connected to the probe (3), the displacement of the suspension point (45) corresponding to a deflection (5) of the probe (3).

8.  Method according to at least one of the preceding claims, **characterized in that** the determination of the weight of the probe (3) is carried out at least at each change of probe, preferably at each commissioning of the coordinate measuring machine.

9.  Method according to one of the preceding claims, **characterized in that** measurement operation with the coordinate measuring machine is prevented upon detection of a weight of the probe (3) exceeding a maximum value.

10. Coordinate measuring machine having a probe head and a probe which can be connected thereto, and having an apparatus with a control device, **characterized in that** the control device is designed such that it can be used to execute the method for determining the weight of the probe according to at least one of the preceding Claims 1 to 5, 7 to 9, in which the control device (51) deflects the probe (3) from a rest position (2), and the weight of the probe (3) is determined by the control device from the ratio of the introduced force and sensed deflection.

11. Coordinate measuring machine having a probe head and a probe which can be connected thereto, and having an apparatus with a control device, **characterized in that** the control device is designed such that it can be used to execute the method for determining the weight of the probe according to at least one of the preceding Claims 6, 8 or 9, in which the probe (3) is positioned at a zero position (60) by the control device (51) which the probe head had assumed before accommodating the probe, this being done by triggering a drive (31) provided for deflecting the probe (3), the weight of the probe being determined from the introduced force.

**Revendications**

1.  Procédé pour déterminer le poids d'un palpeur relié à une tête palpeuse d'une machine de mesure de coordonnées, la machine de mesure de coordonnées comprenant un dispositif de commande auquel des signaux venant du palpeur ou de la tête palpeuse sont amenés, **caractérisé en ce que** le palpeur (3) est dévié d'une position de repos (2) par le dispositif de commande (51) et **en ce que** le poids du palpeur (3) est déterminé à partir du rapport entre la force appliquée et la déviation détectée.

2. Procédé selon la revendication 1, **caractérisé en ce qu'**un élément (61) convertissant une sollicitation de force en signaux électriques, dont les signaux sont amenés au dispositif de commande (51), est attribué au palpeur (3).

3. Procédé selon la revendication 2, **caractérisé en ce que** l'élément (61) de conversion comprend un dispositif piézoélectrique (63).

4. Procédé selon la revendication 2, **caractérisé en ce que** le palpeur (3) est relié à la tête palpeuse (1) avec l'insertion de l'élément (61) de conversion.

5. Procédé selon la revendication 1, **caractérisé en ce que** le palpeur (3) est sollicité avec une force prédéfinie pour la déviation à partir de la position de repos (2).

6. Procédé pour déterminer le poids d'un palpeur relié à une tête palpeuse d'une machine de mesure de coordonnées, la machine de mesure de coordonnées comprenant un dispositif de commande auquel des signaux venant du palpeur ou de la tête palpeuse sont amenés, **caractérisé en ce que** le palpeur (3) est positionné sur une position zéro (60) que la tête palpeuse avait occupé avant le logement du palpeur, par le fait qu'un entraînement (31) prévu pour la déviation du palpeur (3) est commandé, le poids du palpeur étant déterminé à partir de la force appliquée.

7. Procédé selon la revendication 1, **caractérisé en ce que** le palpeur (3) est positionné sur une position zéro (60) que la tête palpeuse (1) avait occupée sans palpeur (3), la tête palpeuse (1) étant pourvue d'un ressort de compensation (41) pour la compensation du poids propre, qui présente un point de suspension (45) non relié au palpeur (3), lequel point est déplacé dans le sens vertical pour la réoccupation de la position zéro (60) après la réception du palpeur (3) et présente un point de suspension (43) en liaison active avec le palpeur (3), le déplacement du point de suspension (45) correspondant à une déviation (5) du palpeur (3).

8. Procédé selon au moins l'une quelconque des revendications précédentes, **caractérisé en ce que** la détermination du poids du palpeur (3) est effectuée au moins lors de chaque changement de palpeur, de préférence lors de chaque mise en service de la machine de mesure de coordonnées.

9. Procédé selon l'une quelconque des revendications précédentes, **caractérisé en ce que** l'exploitation de mesure avec la machine de mesure de coordonnées est empêchée en cas de détection d'un poids du palpeur (3) qui dépasse une valeur maximale.

10. Machine de mesure de coordonnées comprenant une tête palpeuse et un palpeur pouvant être relié à celle-ci, ainsi qu'un dispositif équipé d'un dispositif de commande, **caractérisée en ce que** le dispositif de commande est conçu de telle sorte que le procédé pour déterminer le poids du palpeur peut être réalisé à cet effet selon au moins l'une quelconque des revendications précédentes 1 à 5, 7 à 9, le palpeur (3) étant dévié d'une position de repos (2) par le dispositif de commande (51) et le poids du palpeur (3) étant déterminé par le dispositif de commande à partir du rapport entre la force appliquée et la déviation détectée.

11. Machine de mesure de coordonnées comprenant une tête palpeuse et un palpeur pouvant être relié à celle-ci, ainsi qu'un dispositif équipé d'un dispositif de commande, **caractérisé en ce que** le dispositif de commande est conçu de telle sorte que le procédé pour déterminer le poids du palpeur peut être réalisé à cet effet selon au moins l'une quelconque des revendications précédentes 6, 8 ou 9, le palpeur (3) étant positionné par le dispositif de commande (51) sur une position zéro (60) que la tête palpeuse avait occupée avant la réception du palpeur, en commandant un entraînement (31) prévu pour la déviation du palpeur (3), le poids du palpeur étant déterminé à partir de la force appliquée.

Fig.1

Fig. 2

Fig. 3

Fig. 4

Fig. 5